# EUROPEAN PATENT SPECIFICATION

(11) **EP 0 895 885 B1**
(45) Date of publication and mention of the grant of the patent: **27.11.2002**
(21) Application number: 98830426.7
(22) Date of filing: 15.07.1998
(51) Int. Cl.: B60H 1/00

(54) **Device for driving a rotatable deflector, particularly for a motor-vehicle climatization system**
Vorrichtung zur Ansteuerung eines drehbaren Deflektors, insbesondere für eine Fahrzeugklimaanlage
Dispositif de commande pour un déflecteur pivotable, en particulier pour un climatiseur de véhicule

(30) Priority: 01.08.1997 IT TO970704
(43) Date of publication of application: 10.02.1999
(73) Proprietor: C.R.F. Società Consortile per Azioni, 10043 Orbassano (TO) (IT)
(72) Inventor: Butera, Francesco, Strada Torino 50 10043 Orbassano, Torino (IT)
(74) Representative: Notaro, Giancarlo

(56) References cited:
- EP-A- 0 173 433
- EP-A- 0 461 075
- PATENT ABSTRACTS OF JAPAN vol. 008, no. 182 (M-319), 22 August 1984 (1984-08-22) & JP 59 074446 A (MATSUSHITA DENKI SANGYO KK), 26 April 1984 (1984-04-26)
- PATENT ABSTRACTS OF JAPAN vol. 010, no. 191 (M-495), 4 July 1986 (1986-07-04) & JP 61 036632 A (MATSUSHITA ELECTRIC IND CO LTD), 21 February 1986 (1986-02-21)

## Description

The present invention relates to a driving device for a rotatable deflector, particularly for a climatization system in a motor-vehicle, of the type indicated in the pre-characterizing portion of claim 1. A device of this type is known from JP 59 074446 A.

The object of the present invention is that of providing a device of the above indicated type which is simple, inexpensive while being at the same time efficient and precise.

In view of achieving this object, the invention provides a device as indicated in claim 1.

Preferably, with the said shape memory torsion bar there are associated spring means, such as in form of a spiral spring, tending to return the deflector towards a starting position, corresponding to the rest undeformed condition of the shape memory torsion bar.

According to a further feature of the invention. locking means are also provided adapted to define a plurality of adjustment positions of the deflector, comprising a first engaging member operatively connected to the deflector and movable therewith and a second engaging member carried by the supporting body and adapted to cooperate with the first engaging member to define the above mentioned adjustment positions of the deflector. Preferably, there are further provided means for driving a movement of said second engaging member away from its engaging position on the first engaging member, said means comprising also a shape memory actuating element.

The use of actuating elements made of shape memory metal alloys, typically nickel and titanium alloys, has been known for a long time and described in the technical literature. When a predetermined transition temperature is reached, such as in the order of 100°C, these elements are deformed. For instance, EP-A-0173433 shows the use of shape memory metal wires for actuating the adjustment movements of a motor-vehicle outer rear view mirror.

Starting from this principle, the invention lies in the new and non obvious application of this technology to the adjustment of a deflector, such as a deflector forming part of a climatization device of a motor-vehicle.

The invention will be now described with reference to the annexed drawing, given purely by way of non limiting example, which shows a perspective view partially in cross-section of a component of a motor-vehicle climatization device including a deflector provided with a device according to the invention.

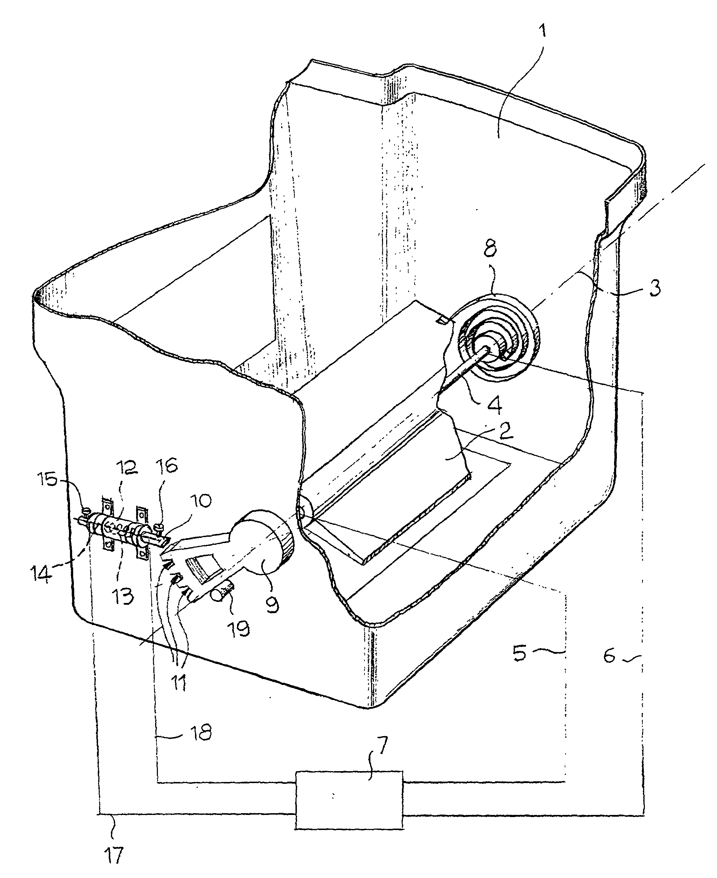

With reference to the drawing, reference numeral 1 designates the supporting casing of a climatization device, inside which a deflector 2 is rotatably supported around an axis 3. The deflector 2 is for controlling the direction of an air-flow which is directed through the supporting casing. However, it is clearly apparent that the invention is applicable to any device which includes a rotatable deflector which is to be positioned selectively at a number of adjustment positions.

According to the invention, the body of the deflector 2 is rigidly connected to a torsion bar 4 made of a shape memory metal alloy. One end of the torsion bar 4 is secured to the supporting body 1, whereas the other end is free to rotate and carries the deflector 2. The ends of the torsion bar 4 are connected by electric lines 5, 6 to electric supply means 7 which are indicated only diagrammatically in the drawing, since these means can be made and arranged according to any known technique and do not fall, taken alone, within the scope of the present invention.

With the torsion bar 4 there is associated a spiral spring 8 having one end secured to the movable part of the bar and the opposite end secured to the supporting body 1 and arranged so that it tends to return the bar towards its undeformed rest position.

The movable end of the torsion bar 4 is rotatably supported by the supporting body 1 and also rigidly carries a first engaging member 9 which cooperates with a second engaging member 10 to define a plurality of adjustment positions of the deflector 2. In the case of the illustrated example, the first engaging member is constituted by a toothed sector comprising a number of hollows 11 adapted to selectively receive the front end of a bolt 10. The bolt 10 is slidably mounted within a body 12 secured to the supporting body 1 and is biassed by a spring 13 towards its position of engagement of the tooth sector 11. Therefore, during the rotation of deflector 2 which takes place following an actuation of the shape memory torsion bar 4, the bolt 10 snap engages the hollows 11 in sequence until it reaches the required position, at which the electric supply to the torsion bar 4 is interrupted.

Naturally, the means 7 for controlling the electric supply preferably comprise also means for detecting the position of the first engaging member 9 and for automatically interrupting the electric supply to the torsion bar 4 when a predetermined adjustment position is reached, which is set by the user by a control member (not shown). Also these details have not been described since they can be made in any known way and do not fall, taken alone, within the scope of the invention.

Preferably, also inside the casing 12 there is provided a shape memory metal alloy wire 14 having its ends respectively connected by means of clamps 15, 16 to the fixed structure and the bolt 10 so that when said wire 14 is supplied with current through lines 17, 18 it decreases in length causing a retraction of bolt 10 and disengagement thereof from the toothed sector 9 which then returns to a starting position, defined by a stop element 19, if the electric supply to the torsion bar 4 has been interrupted, due to the return action of spring 8.

Naturally, the shape and the arrangement of the engaging member 9 and the bolt 10 could also be different from those shown purely by way of example.

Furthermore, while the principle of the invention remain the same, the details of construction and the embodiments may widely vary with respect to what has been described and illustrated.

## Claims

1. Driving device for a rotatable deflector, particularly for a climatization system in a motor-vehicle, comprising a supporting body (1) and a deflector (2) rotatably mounted around one axis (3) on said supporting body (1),
wherein said deflector (2) is rotatably supported on the supporting body (1) by means of a torsion bar (4) made of a shape memory metal alloy
**characterized in that**
said torsion bar (4) can be activated by a passage of electric current through the torsion bar for causing a rotation of the deflector (2) around said axis (3).

2. Device according to claim 1, **characterized in that** with the shape memory torsion bar (4) there are associated spring means tending to return the deflector (2) towards a starting position, corresponding to the rest condition of the torsion bar (4).

3. Device according to claim 1, **characterized in that** locking means (9, 10) are provided adapted to define a plurality of adjustment positions of the deflector (2), said locking means including a first engaging member (9) operatively connected to one movable end of the torsion bar (4) and a second engaging member (10) carried by the supporting body (1) and adapted to cooperate with said first engaging member (9) to define said operative adjustment positions of the deflector.

4. Device according to claim 3, **characterized in that** means are also provided for driving a disengagement of said second member (10) from the first engaging member (9), comprising a shape memory actuating element (14).

5. Device according to claim 4, **characterized in that** said first engaging member (9) is in form of a toothed sector, with a plurality of hollows (11) adapted to selectively receive said second engaging member (10), which is in form of a bolt, slidably mounted within a casing (12) secured to the supporting body (1), said shape memory actuating element (14) being constituted by a shape memory metal alloy wire operatively interposed between the bolt (10) and the supporting casing (12).

## Patentansprüche

1. Antriebsgerät für einen drehbaren Deflektor, insbesondere für eine Klimaanlage in einem Kraftfahrzeug, aufweisend einen Unterstützungskörper (1) und einen Deflektor (2), der drehbar um eine Achse (3) an dem Unterstützungskörper (1) befestigt ist, wobei der Deflektor (2) mit Hilfe einer Torsionsfeder (4) bestehend aus einer Gedächtnismetalllegierung an dem Unterstützungskörper (1) drehbar gelagert ist, **dadurch gekennzeichnet, dass**
die Torsionsfeder (4) durch einen Durchfluss eines elektrischen Stroms durch die Torsionsfeder aktiviert werden kann, um eine Rotation des Deflektors (2) um die Achse (3) zu bewirken.

2. Vorrichtung gemäß Anspruch 1, **dadurch gekennzeichnet, dass** der Gedächtnistorsionsfeder (4) Federmittel zugeordnet sind, die dazu neigen, den Deflektor (2) in eine Startposition entsprechend dem Ruhezustand der Torsionsfeder (4) zurückzubewegen.

3. Vorrichtung gemäß Anspruch 1, **dadurch gekennzeichnet, dass** Verriegelungsmittel (9, 10) bereitgestellt sind, die angepasst sind, um eine Mehrzahl von Einstellpositionen des Deflektors (2) zu definieren, wobei die Verriegelungsmittel ein erstes Eingriffselement (9) umfassen, das wirksam mit einem beweglichen Ende der Torsionsfeder (4) verbunden ist, und die ein zweites Eingriffselement (10) umfassen, dass durch den Unterstützungskörper (1) getragen wird und angepasst ist, um mit dem ersten Eingriffselement (9) zusammenzuwirken, um die betrieblichen Einstellpositionen des Deflektors zu definieren.

4. Vorrichtung gemäß Anspruch 3, **dadurch gekennzeichnet, dass** ebenfalls Mittel zum Bewirken eines Trennens des zweiten Elements (10) von dem ersten Eingriffselement (9) bereitgestellt sind, die ein Gedächtnisbetätigungselement (14) umfassen.

5. Vorrichtung gemäß Anspruch 4, **dadurch gekennzeichnet, dass** das erste Eingriffselement (9) in Form eines gezahnten Sektors mit einer Mehrzahl von Hohlräumen (11) vorliegt, die angepasst sind, um selektiv das zweite Eingriffselement (10) aufzunehmen, dass in Form eines Bolzens vorliegt, der gleitend innerhalb eines Gehäuses (12) befestigt ist, dass an dem Unterstützungskörper (1) befestigt ist, wobei das Gedächtnisbetätigungselement (14) aus einem Gedächtnismetalllegierungsdraht besteht, der wirksam zwischen den Bolzen (10) und das Unterstützungsgehäuse (12) geschaltet ist.

## Revendications

1. Dispositit d'entraînement pour un déflecteur rotatif, en particulier pour un système de climatisation dans un véhicule automobile, comportant un corps de support (1) et un déflecteur (2) monté de manière à pouvoir tourner autour d'un axe (3) sur ledit corps de support (1),
dans lequel ledit déflecteur (2) est supporté de manière à pouvoir tourner sur le corps de support (1) à l'aide d'une barre de torsion (4) formé d'un alliage métallique à mémoire de forme,
**caractérisé en ce que** ladite barre de torsion (4) peut être activée par le passage d'un courant électrique dans la barre de torsion de manière à provoquer une rotation du déflecteur (2) autour dudit axe (3).

2. Dispositif selon la revendication 1, **caractérisé en ce qu'**à la barre de torsion à mémoire de forme (4) sont associés des moyens formant ressort, qui tendent à ramener le déflecteur (2) vers une position de départ, qui correspond à la position de repos de la barre de torsion (4).

3. Dispositif selon la revendication 1, **caractérisé en ce que** des moyens de blocage (9, 10) sont prévus, moyens qui sont adaptés pour définir une pluralité de position d'ajustement du déflecteur (2), lesdits moyens de blocage incluant un premier organe d'engrènement (9) raccordé de façon opérationnelle à une extrémité mobile de la barre de torsion (4) et un second organe d'engrènement (10) porté par le corps de support (1) et adapté pour coopérer avec ledit premier organe d'engrènement (9) pour définir lesdites positions opérationnelles d'ajustement du déflecteur.

4. Dispositif selon la revendication 3, **caractérisé en ce que** des moyens sont également prévus pour commander le désenclenchement dudit second organe (10) par rapport au premier organe d'engrènement (9), ces moyens comprenant un élément d'actionnement à mémoire de forme (14).

5. Dispositif selon la revendication 4, **caractérisé en ce que** ledit premier organe d'engrènement (9) se présentent sous la forme d'un secteur denté, comportant une pluralité d'évidements (11) adaptées pour recevoir sélectivement ledit second organe d'engrènement (10), qui se présente sous la forme d'un goujon, monté de manière à pouvoir glisser à l'intérieur d'un boîtier (12) fixé au corps de support (1), ledit organe d'engrènement à mémoire de forme (14) étant constitué par un fil formé d'un alliage métallique à mémoire de forme intercalé de façon opérationnelle entre le goujon (10) et le boîtier de support (12).
